# EUROPEAN PATENT APPLICATION

(11) **EP 4 851 673 A1**
(43) Date of publication of application: **09.12.2026**
(21) Application number: 25748633.2
(22) Date of filing: 28.01.2025
(51) Int. Cl.: G01S 15/46, G01S 15/87, G01S 15/931

(54) **OBJECT DETECTION DEVICE**

(30) Priority: 02.02.2024 JP 2024015066; 02.02.2024 JP 2024015258
(71) Applicant: AISIN CORPORATION, Kariya-shi, Aichi 448-8650 (JP)
(72) Inventor: SUGAE, Ippei, Kariya-shi, Aichi 448-8650 (JP); SASSA, Koichi, Kariya-shi, Aichi 448-8650 (JP); SHIBATA, Naoki, Kariya-shi, Aichi 448-8650 (JP); OKAMOTO, Asako, Kariya-shi, Aichi 448-8650 (JP)
(74) Representative: TBK
(86) International application number: PCT/JP2025/002640
(87) International publication number: WO 2025/164629

(57) **Abstract**

An object detection device according to an embodiment is mounted on a mobile body and detects an object present around the mobile body. The object detection device includes: a plurality of transmission and reception parts that transmit and receive ultrasonic waves; and a computation part that calculates an object distance, which is a distance from the mobile body to the object, on the basis of transmission and reception timings of ultrasonic waves in each of the plurality of transmission and reception parts. The computation part calculates the distance from the mobile body to the object by a plurality of methods on the basis of transmission and reception timings of ultrasonic waves in the plurality of transmission and reception parts.

## Description

### TECHNICAL FIELD

The present invention relates to an object detection device.

### BACKGROUND ART

In an object detection device that detects an obstacle present around a vehicle by using ultrasonic waves, a technique is used in which a plurality of transmission and reception parts that transmit and receive ultrasonic waves are installed on a vehicle body, and the distance from the vehicle to the obstacle is calculated on the basis of transmission and reception timings of the ultrasonic waves in each transmission and reception part. In such a configuration including a plurality of transmission and reception parts, reflected waves (ultrasonic waves generated when ultrasonic waves (transmission waves) transmitted from the transmission and reception parts are reflected by an object) received by each transmission and reception part include a direct wave and an indirect wave.

The direct wave is a reflected wave corresponding to a transmission wave transmitted from a certain transmission and reception part, the reflected wave being received by the same transmission and reception part as the transmission and reception part that has transmitted the transmission wave. The indirect wave is a reflected wave corresponding to a transmission wave transmitted from a certain transmission and reception part, the reflected wave being received by a transmission and reception part different from the transmission and reception part that has transmitted the transmission wave.

As a technique using such a direct wave and an indirect wave, a technique of estimating the position of an obstacle by a combination of two direct waves and two indirect waves is disclosed (Patent Literature 1). In addition, a technique for estimating the distance to an obstacle by a combination of a distance calculated on the basis of a direct wave and a distance calculated on the basis of an indirect wave is disclosed (see, for example, Patent Literature 2).

### CITATIONS LIST

### PATENT LITERATURE

Patent Literature 1: JP 2016-085041 A
Patent Literature 2: JP 2016-80648 A

### SUMMARY OF INVENTION

### TECHNICAL PROBLEMS

However, in the conventional techniques, since it is necessary to detect both a direct wave and an indirect wave, the detection accuracy cannot be improved in a situation where only one of a direct wave or an indirect wave can be detected.

One of the problems to be solved by the embodiments of the present invention is to provide an object detection device that can detect an obstacle with high accuracy even in a case where only one of a direct wave or an indirect wave can be detected.

### SOLUTIONS TO PROBLEMS

An object detection device according to an embodiment of the present invention being mounted on a mobile body and detecting an object present around the mobile body, the object detection device includes: a plurality of transmission and reception parts that transmit and receive ultrasonic waves; and a computation part that calculates an object distance, which is a distance from the mobile body to the object, on the basis of transmission and reception timings of ultrasonic waves in each of the plurality of transmission and reception parts, in which the computation part calculates the distance from the mobile body to the object by a plurality of methods on the basis of transmission and reception timings of ultrasonic waves in the plurality of transmission and reception parts.

### ADVANTAGEOUS EFFECTS OF INVENTION

According to the object detection device according to the embodiment of the present invention, as an example, an obstacle can be detected with high accuracy.

### BRIEF DESCRIPTION OF DRAWINGS

FIG. 1 is a view illustrating an example of a configuration of a vehicle according to a first embodiment.
FIG. 2 is a diagram illustrating an example of a configuration of a vehicle control system according to the first embodiment.
FIG. 3 is a diagram illustrating an example of a method of calculating a distance by a TOF method.
FIG. 4 is a diagram illustrating an example of a functional configuration of an object detection device according to the first embodiment.
FIG. 5 is a diagram illustrating examples of a first direct wave distance and a second direct wave distance according to the first embodiment.
FIG. 6 is a diagram illustrating examples of a corrected first direct wave distance and a corrected second direct wave distance according to the first embodiment.
FIG. 7 is a flowchart illustrating an example of an object detection process according to the first embodiment.
FIG. 8 is a flowchart illustrating an example of an obstacle distance calculation process according to the first embodiment.
FIG. 9 is a flowchart illustrating an example of a process at the time of outputting an obstacle distance according to the first embodiment.
FIG. 10 is a diagram illustrating an example of a functional configuration of an object detection device according to a second embodiment.
FIG. 11 is a diagram illustrating examples of a first direct wave distance and a second direct wave distance according to the second embodiment.
FIG. 12 is a diagram illustrating examples of a corrected first direct wave distance and a corrected second direct wave distance according to the second embodiment.
FIG. 13 is a diagram illustrating examples of a first indirect wave distance and a second indirect wave distance according to the second embodiment.
FIG. 14 is a diagram illustrating examples of a corrected first indirect wave distance and a corrected second indirect wave distance according to the second embodiment.
FIG. 15 is a flowchart illustrating an example of a process in the object detection device according to the second embodiment.

### DESCRIPTION OF EMBODIMENTS

Hereinafter, embodiments of the present disclosure will be described with reference to the drawings. The configurations of the embodiments described below and the functions and effects brought about by the configurations are merely examples, and the present invention is not limited to the following description.

### [First embodiment]

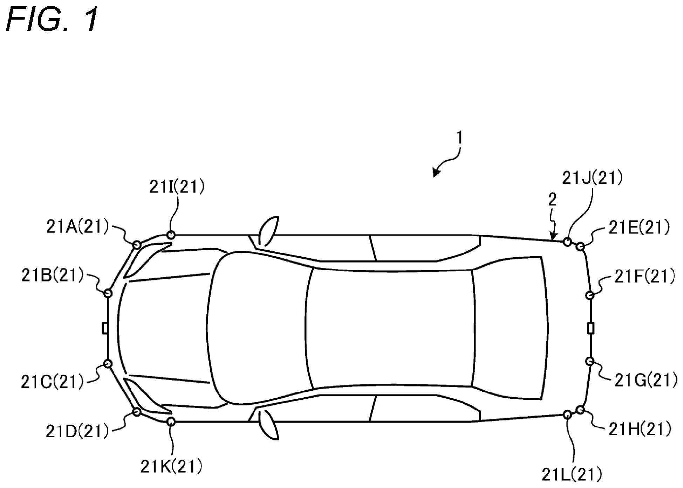

FIG. 1 is a view illustrating an example of a configuration of a vehicle 1 according to a first embodiment. The vehicle 1 is an example of a mobile body on which an object detection device according to the present embodiment is mounted. The object detection device according to the present embodiment is a device that detects an obstacle (an example of an object) present around the vehicle 1 on the basis of information such as time of flight (TOF) and a Doppler shift acquired by transmission and reception of ultrasonic waves.

The object detection device according to the present embodiment includes a plurality of transmission and reception parts 21A to 21L. Hereinafter, the plurality of transmission and reception parts 21A to 21L may be referred to as transmission and reception parts 21 in a case where it is not necessary to distinguish the plurality of transmission and reception parts 21A to 21L. Each of the transmission and reception parts 21 is installed on a vehicle body 2 as an exterior of the vehicle 1, transmits an ultrasonic wave toward the outside of the vehicle body 2, and receives an ultrasonic wave generated when the ultrasonic wave is reflected by an object present outside the vehicle body 2. Hereinafter, an ultrasonic wave transmitted from the transmission and reception part 21 may be referred to as a transmission wave, and an ultrasonic wave generated when the transmission wave is reflected by an object may be referred to as a reflected wave.

In the example illustrated in FIG. 1, the four transmission and reception parts 21A to 21D are disposed at the front end portion of the vehicle body 2, the four transmission and reception parts 21E to 21H are disposed at the rear end portion, the two transmission and reception parts 21I and 21J are disposed on the right side surface portion, and the two transmission and reception parts 21K and 21L are disposed on the left side surface portion. Note that the number and installation positions of the transmission and reception parts 21 are not limited to this example.

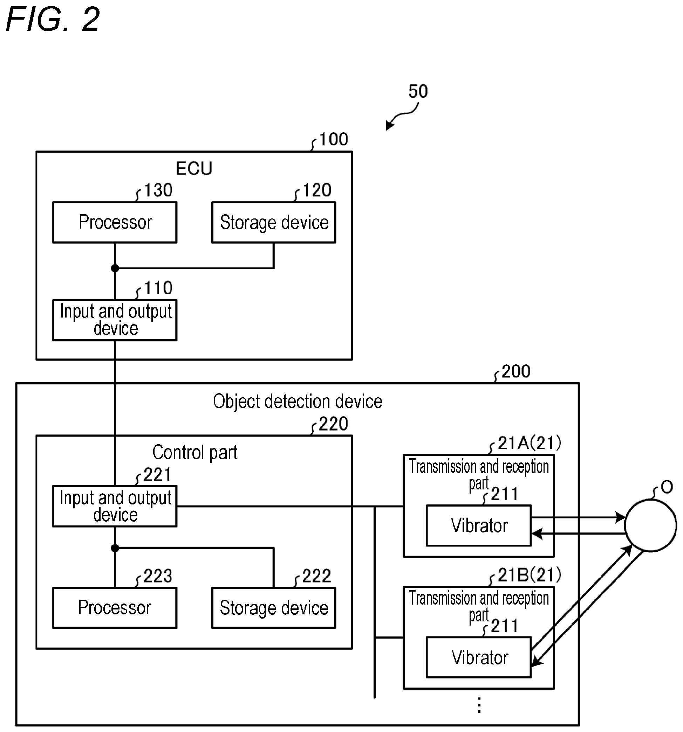

FIG. 2 is a diagram illustrating an example of a configuration of a vehicle control system 50 according to the first embodiment. The vehicle control system 50 performs a process for controlling the vehicle 1 on the basis of information output from an object detection device 200. The vehicle control system 50 according to the present embodiment includes an ECU 100 and the object detection device 200.

The object detection device 200 includes the plurality of transmission and reception parts 21 and a control part 220. Each transmission and reception part 21 includes a vibrator 211 configured using a piezoelectric element or the like, an amplifier, and the like, and realizes transmission and reception of an ultrasonic wave by vibration of the vibrator 211. Specifically, each transmission and reception part 21 transmits an ultrasonic wave generated in response to vibration of the vibrator 211 as a transmission wave, and detects vibration of the vibrator 211 caused by a reflected wave of the transmission wave reflected by an object such as an obstacle O or a road surface. The vibration of the vibrator 211 is converted into an electric signal. TOF corresponding to the distance from the transmission and reception part 21 to the obstacle O and Doppler shift information or the like corresponding to the relative speed between the vehicle 1 and the obstacle O can be acquired on the basis of the electric signal.

Note that, in the example illustrated in FIG. 2, a configuration in which both transmission of a transmission wave and reception of a reflected wave are performed using the single vibrator 211 is illustrated, but the configuration of the transmission and reception part 21 is not limited thereto. For example, like a configuration in which a vibrator for transmitting a transmission wave and a vibrator for receiving a reflected wave are separately provided, the transmission side and the reception side may be separated.

The control part 220 includes an input and output device 221, a storage device 222, and a processor 223. The input and output device 221 is an interface device that enables transmission and reception of information between the control part 220 and an external device (the transmission and reception part 21, an ECU 100, or the like). The storage device 222 includes a main storage device such as a read only memory (ROM) and a random access memory (RAM), and an auxiliary storage device such as a hard disk drive (HDD) or a solid state drive (SSD). The processor 223 is an integrated circuit that executes various processes for realizing the functions of the control part 220, and can be configured using, for example, a central processing unit (CPU), an application specific integrated circuit (ASIC), a field programmable gate array (FPGA), or the like that operates according to a program. The processor 223 executes various arithmetic processes and control processes by reading and executing a program stored in the storage device 222.

The ECU 100 is a unit that executes various processes for controlling the vehicle 1 on the basis of information acquired from the object detection device 200 and the like. The ECU 100 includes an input and output device 110, a storage device 120, and a processor 130. The input and output device 110 is an interface device that enables transmission and reception of information between the ECU 100 and an external mechanism (the object detection device 200, a drive mechanism, a braking mechanism, a steering mechanism, a transmission mechanism, an in-vehicle display, a speaker, various sensors, or the like). The storage device 120 includes a main storage device such as a ROM and a RAM, and an auxiliary storage device such as an HDD or an SSD. The processor 130 is an integrated circuit that executes various processes for realizing the functions of the ECU 100, and can be configured using, for example, a CPU, an ASIC, an FPGA, or the like. The processor 130 reads a program stored in the storage device 120 and executes various arithmetic processes and control processes.

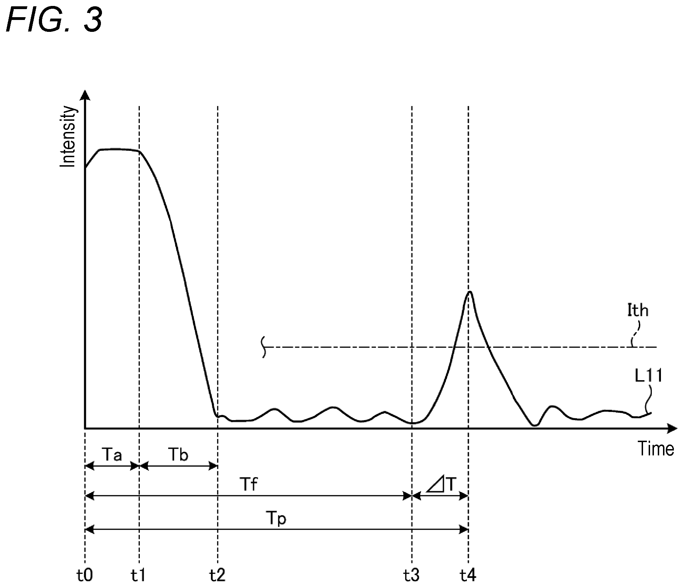

FIG. 3 is a diagram illustrating an example of a method of calculating a distance by a TOF method. FIG. 3 illustrates an envelope L11 (echo information) indicating a temporal change in intensity (signal level) of ultrasonic waves transmitted and received by the transmission and reception part 21. In the graph illustrated in FIG. 3, the horizontal axis corresponds to time (TOF), and the vertical axis corresponds to the intensity of ultrasonic waves transmitted and received by the transmission and reception part 21 (the magnitude of vibration of the vibrator 211).

The envelope L11 indicates a temporal change in intensity indicating the magnitude of vibration of the vibrator 211. From the envelope L11 illustrated in FIG. 3, it can be understood that the vibrator 211 is driven for time Ta from timing t0 and vibrates, so that the vibration of the vibrator 211 due to inertia continues while being attenuated during time Tb from the completion of transmission of the transmission wave at timing t1 to timing t2. Therefore, in the graph illustrated in FIG. 3, the time Tb corresponds to a so-called reverberation time.

The envelope L11 reaches a peak at which the magnitude of the vibration of the vibrator 211 becomes equal to or greater than a detection threshold Ith at timing t4 after a lapse of time Tp from the timing t0 at which transmission of the transmission wave is started. The detection threshold Ith is a value set to determine whether the vibration of the vibrator 211 is caused by reception of a reflected wave from the obstacle O (another vehicle, structure, a pedestrian, or the like) or by reception of a reflected wave from an object (for example, a road surface or the like) other than the obstacle O. Note that, here, the detection threshold Ith is illustrated as a constant value, but the detection threshold Ith may be a variation value that changes according to the situation. Vibration having a peak equal to or greater than the detection threshold Ith can be regarded as being caused by reception of a reflected wave from the obstacle O.

The envelope L11 in this example indicates that the vibration of the vibrator 211 is attenuated after the timing t4. Therefore, the timing t4 corresponds to the timing at which reception of the reflected wave from the obstacle O is completed, in other words, the timing at which the transmission wave transmitted last at the timing t1 returns as the reflected wave.

On the envelope L11, timing t3 as the start point of the peak at the timing t4 corresponds to the timing at which reception of the reflected wave from the obstacle O starts, in other words, the timing at which the transmission wave transmitted first at the timing t0 returns as a reflected wave. Therefore, time ΔT between the timing t3 and the timing t4 is equal to the time Ta as the transmission time of the transmission wave.

From the above, in order to obtain the distance from the transmission and reception part 21 which is the transmission and reception source of ultrasonic waves to the obstacle O by using TOF, it is necessary to obtain time Tf between the timing t0 at which the transmission wave starts to be transmitted and the timing t3 at which the reflected wave starts to be received. The time Tf can be obtained by subtracting the time ΔT equal to the time Ta as the transmission time of transmission wave from the time Tp as a difference between the timing t0 and the timing t4 at which the intensity of the reflected wave reaches a peak exceeding the detection threshold Ith.

The timing t0 at which the transmission wave starts to be transmitted can be easily determined as the timing at which the object detection device 200 starts to operate, and the time Ta as the transmission time of the transmission wave is set in advance by setting or the like. Therefore, by determining the timing t4 at which the intensity of the reflected wave reaches the peak equal to or greater than the detection threshold Ith, the distance from the vehicle 1 (the transmission and reception part 21 that is the transmission and reception source of ultrasonic waves) to the obstacle O can be obtained.

Note that the above calculation method is an example, and the distance from the vehicle 1 to the obstacle O may be calculated appropriately using a known or new method.

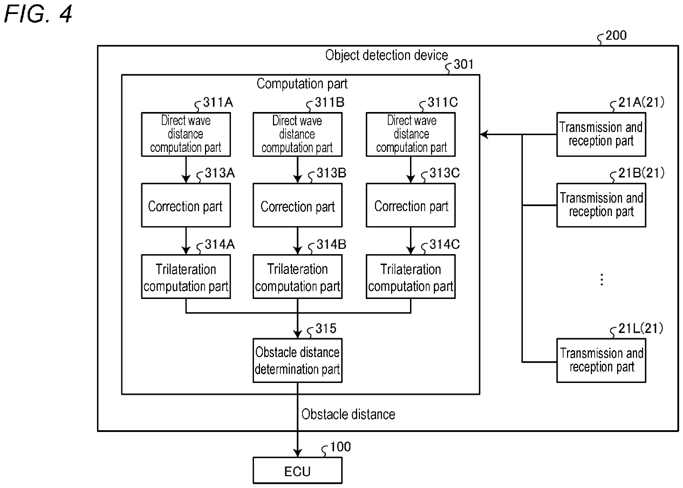

FIG. 4 is a diagram illustrating an example of a functional configuration of the object detection device 200 according to the first embodiment. The object detection device 200 according to the present embodiment includes a computation part 301. The computation part 301 includes three direct wave distance computation parts 311A to 311C, three correction parts 313A to 313C, three trilateration computation parts 314A to 314C, and one obstacle distance determination part 315. These functional parts can be realized, for example, by cooperation of hardware and software (program or the like) of the object detection device 200 as illustrated in FIG. 2. In addition, at least some of these functional parts may be realized by dedicated hardware (circuit).

The computation part 301 calculates an obstacle distance (an example of an object distance), which is a distance from the vehicle 1 to the obstacle O, on the basis of transmission and reception timings of ultrasonic waves in each transmission and reception part 21. That is, the computation part 301 calculates the distance from the vehicle 1 (mobile body) to the obstacle O (object) by a plurality of methods on the basis of the transmission and reception timings of ultrasonic waves in the plurality of transmission and reception parts 21.

Reflected waves received by each transmission and reception part 21 according to the present embodiment include a direct wave and an indirect wave. The direct wave is a reflected wave corresponding to a transmission wave transmitted from a certain transmission and reception part 21 (for example, the transmission and reception part 21A), the reflected wave being received by the same transmission and reception part 21 (for example, the transmission and reception part 21A) as the transmission and reception part 21 that has transmitted the transmission wave. The indirect wave is a reflected wave corresponding to a transmission wave transmitted from a certain transmission and reception part 21 (for example, the transmission and reception part 21A), the reflected wave being received by a transmission and reception part 21 (for example, the transmission and reception part 21B) different from the transmission and reception part 21 that has transmitted the transmission wave. The computation part 301 of the present embodiment calculates the obstacle distance by using reception timings of direct waves.

The direct wave distance computation part 311A, the correction part 313A, and the trilateration computation part 314A calculate the distance to the obstacle by using a direct wave with respect to the transmission wave from the transmission and reception part 21B on the right side of the front end portion (sometimes referred to as the front) of the vehicle 1 and a direct wave with respect to the transmission wave from the transmission and reception part 21A at the right corner bent from the front end portion to the right side surface portion (sometimes referred to as a right side). This distance is referred to as a first distance. In addition, the direct wave distance computation part 311A, the correction part 313A, and the trilateration computation part 314A calculate the distance (first distance) to the obstacle by using a direct wave with respect to the transmission wave from the transmission and reception part 21C on the left side of the front end portion and a direct wave with respect to the transmission wave from the transmission and reception part 21D at the left corner bent from the left side of the front end portion to the left side surface portion (sometimes referred to as a left side).

The direct wave distance computation part 311B, the correction part 313B, and the trilateration computation part 314B calculate the distance to the obstacle by using direct waves with respect to the transmission waves from the transmission and reception part 21I and the transmission and reception part 21J on the right side surface portion of the vehicle 1. This distance is referred to as a second distance. In addition, the direct wave distance computation part 311B, the correction part 313B, and the trilateration computation part 314B calculate the distance (second distance) to the obstacle by using direct waves with respect to the transmission waves from the transmission and reception part 21K and the transmission and reception part 21L on the left side surface portion of the vehicle 1.

The direct wave distance computation part 311C, the correction part 313C, and the trilateration computation part 314C calculate the distance to the obstacle by using a direct wave with respect to the transmission wave from the transmission and reception part 21A at the right corner of the vehicle 1 and a direct wave with respect to the transmission wave from the transmission and reception part 21I on the right side surface portion. This distance is referred to as a third distance. In addition, the direct wave distance computation part 311C, the correction part 313C, and the trilateration computation part 314C calculate the distance (third distance) to the obstacle by using a direct wave with respect to the transmission wave from the transmission and reception part 21D at the left corner of the vehicle 1 and a direct wave with respect to the transmission wave from the transmission and reception part 21K on the left side surface portion.

Here, the first distance, the second distance, and the third distance are examples of a provisional distance. That is, each of the first distance, the second distance, and the third distance is a distance from the vehicle 1 to the obstacle, but is not a finally-determined obstacle distance but is referred to as a provisional distance or a provisional obstacle distance.

Here, in a case where the direct wave distance computation parts 311A to 311C are not distinguished, the direct wave distance computation parts 311A to 311C are referred to as direct wave distance computation parts 311. In a case where the correction parts 313A to 313C are not distinguished, the correction parts 313A to 313C are referred to as correction parts 313. In a case where the trilateration computation parts 314A to 314C are not distinguished, the trilateration computation parts 314A to 314C are referred to as trilateration computation parts 314.

In a case where the reflected wave of a transmission wave transmitted from the transmission and reception part 21B on the right side of the front end portion, which is one of the plurality of transmission and reception parts 21, is received by the transmission and reception part 21B, the direct wave distance computation part 311A calculates a first direct wave distance based on the timing at which a transmission wave is transmitted from the transmission and reception part 21B and the timing at which the reflected wave (direct wave) of the transmission wave is received by the transmission and reception part 21B. In a case where the reflected wave of a transmission wave transmitted from the transmission and reception part 21A at the right corner is received by the transmission and reception part 21A, the direct wave distance computation part 311A calculates a second direct wave distance based on the timing at which a transmission wave is transmitted from the transmission and reception part 21A and the timing at which the reflected wave (direct wave) of the transmission wave is received by the transmission and reception part 21A.

That is, the first direct wave distance is calculated on the basis of the direct wave received by the transmission and reception part 21B, and the second direct wave distance is calculated on the basis of the direct wave received by the transmission and reception part 21A. Here, the transmission and reception part 21B and the transmission and reception part 21A are an example of a first pair of transmission and reception parts.

The direct wave distance computation part 311A similarly calculates the first direct wave distance and the second direct wave distance by using the transmission and reception part 21C on the left side of the front end portion and the transmission and reception part 21D at the left corner as a pair of transmission and reception parts.

In a case where the reflected wave of a transmission wave transmitted from the transmission and reception part 21I on the right side surface portion, which is one of the plurality of transmission and reception parts 21, is received by the transmission and reception part 21I, the direct wave distance computation part 311B calculates the first direct wave distance based on the timing at which a transmission wave is transmitted from the transmission and reception part 21I and the timing at which the reflected wave (direct wave) of the transmission wave is received by the transmission and reception part 21I. In a case where the reflected wave of a transmission wave transmitted from the other transmission and reception part 21J on the right side surface portion is received by the transmission and reception part 21J, the direct wave distance computation part 311B calculates the second direct wave distance based on the timing at which a transmission wave is transmitted from the transmission and reception part 21J and the timing at which the reflected wave (direct wave) of the transmission wave is received by the transmission and reception part 21J.

That is, the first direct wave distance is calculated on the basis of the direct wave received by the transmission and reception part 21I, and the second direct wave distance is calculated on the basis of the direct wave received by the transmission and reception part 21J. Here, the transmission and reception part 21I and the transmission and reception part 21J are an example of a second pair of transmission and reception parts.

The direct wave distance computation part 311B similarly calculates the first direct wave distance and the second direct wave distance by using the transmission and reception part 21K and the transmission and reception part 21L on the left side surface portion as a pair of transmission and reception parts.

In a case where the reflected wave of a transmission wave transmitted from the transmission and reception part 21A at the right corner, which is one of the plurality of transmission and reception parts 21, is received by the transmission and reception part 21A, the direct wave distance computation part 311C calculates the first direct wave distance based on the timing at which a transmission wave is transmitted from the transmission and reception part 21A and the timing at which the reflected wave (direct wave) of the transmission wave is received by the transmission and reception part 21A. In a case where the reflected wave of a transmission wave transmitted from the transmission and reception part 21I on the right side surface portion is received by the transmission and reception part 21I, the direct wave distance computation part 311C calculates the second direct wave distance based on the timing at which a transmission wave is transmitted from the transmission and reception part 21I and the timing at which the reflected wave (direct wave) of the transmission wave is received by the transmission and reception part 21I.

That is, the first direct wave distance is calculated on the basis of the direct wave received by the transmission and reception part 21A, and the second direct wave distance is calculated on the basis of the direct wave received by the transmission and reception part 21I. Here, the transmission and reception part 21A and the transmission and reception part 21I are an example of a third pair of transmission and reception parts.

The direct wave distance computation part 311C similarly calculates the first direct wave distance and the second direct wave distance by using the transmission and reception part 21D at the left corner and the transmission and reception part 21K on the left side surface portion as a pair of transmission and reception parts.

Here, the frequency of the transmission waves transmitted from the transmission and reception parts 21A and 21C at the front end portions and the transmission and reception parts 21A and 21D at the corners is different from the frequency of the transmission waves transmitted from the transmission and reception parts 21I, 21J, 21K, and 21L on the side surface portions.

The correction part 313A corrects the first direct wave distance and the second direct wave distance calculated by the computation part 311A on the basis of the relative speed between the vehicle 1 and the obstacle O. The correction part 313B corrects the first direct wave distance and the second direct wave distance calculated by the computation part 311B on the basis of the relative speed between the vehicle 1 and the obstacle O. The correction part 313C corrects the first direct wave distance and the second direct wave distance calculated by the computation part 311C on the basis of the relative speed between the vehicle 1 and the obstacle O.

The trilateration computation part 314A calculates the first distance as a provisional distance by trilateration based on the corrected first direct wave distance and the corrected second direct wave distance corrected by the correction part 313A. The trilateration computation part 314B calculates the second distance as a provisional distance by trilateration based on the corrected first direct wave distance and the corrected second direct wave distance corrected by the correction part 313B. The trilateration computation part 314C calculates the third distance as a provisional distance by trilateration based on the corrected first direct wave distance and the corrected second direct wave distance corrected by the correction part 313C.

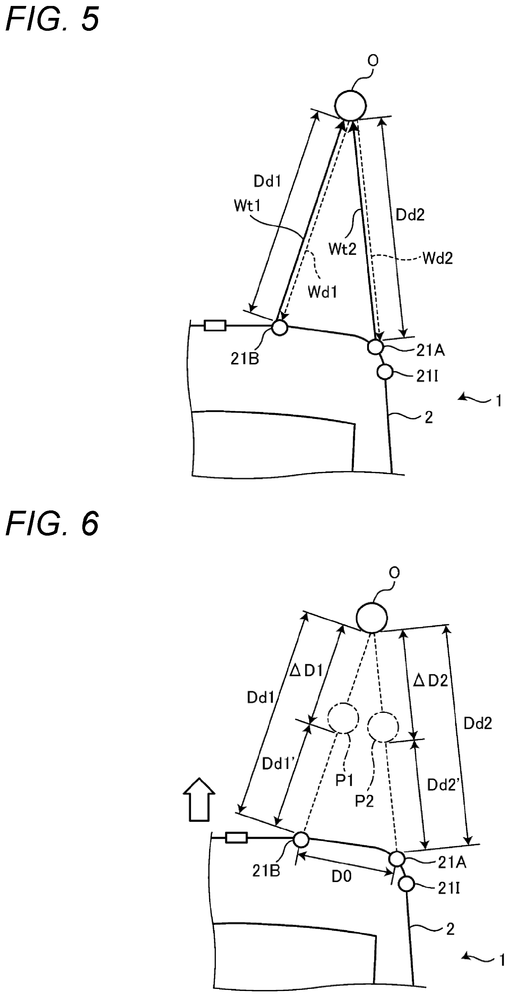

FIG. 5 is a diagram illustrating an example of a first direct wave distance Dd1 and a second direct wave distance Dd2 according to the first embodiment. FIG. 5 illustrates a situation in which the transmission and reception part 21B installed on the right side of the front end portion of the vehicle 1 and the transmission and reception part 21A installed at the right corner are referred to as a first transmission and reception part and a second transmission and reception part, respectively, and the obstacle O exists in front of the vehicle 1. That is, the example of FIG. 5 illustrates an example in which the first distance is calculated by the direct wave distance computation part 311A, the correction part 313A, and the trilateration computation part 314A.

FIG. 5 illustrates a first transmission wave Wt1 transmitted from the first transmission and reception part 21B and a first direct wave Wd1 which is generated when the first transmission wave Wt1 is reflected by the obstacle O and is received by the first transmission and reception part 21B. In addition, FIG. 5 illustrates a second transmission wave Wt2 transmitted from the second transmission and reception part 21A and a second direct wave Wd2 which is generated when the second transmission wave Wt2 is reflected by the obstacle O and is received by the second transmission and reception part 21A.

The first direct wave distance Dd1 is calculated on the basis of the timing at which the first transmission wave Wt1 is transmitted from the first transmission and reception part 21B and the timing at which the first direct wave Wd1 is received by the first transmission and reception part 21B. The second direct wave distance Dd2 is calculated on the basis of the timing at which the second transmission wave Wt2 is transmitted from the second transmission and reception part 21A and the timing at which the second direct wave Wd2 is received by the second transmission and reception part 21A.

FIG. 6 is a diagram illustrating examples of a corrected first direct wave distance Dd1' and a corrected second direct wave distance Dd2' according to the first embodiment. FIG. 6 illustrates the corrected first direct wave distance Dd1' and the corrected second direct wave distance Dd2' in a case where the vehicle 1 gradually moves forward.

The corrected first direct wave distance Dd1' illustrated here is calculated by subtracting a distance change amount ΔD1 based on the relative speed between the vehicle 1 and the obstacle O from the first direct wave distance Dd1 calculated as described above. The corrected second direct wave distance Dd2' is calculated by subtracting a distance change amount ΔD2 based on the relative speed between the vehicle 1 and the obstacle O from the second direct wave distance Dd2 calculated as described above. The relative speed may be calculated using an appropriate method, but can be calculated on the basis of, for example, a Doppler shift between the first transmission wave Wt1 and the first direct wave Wd1 and a Doppler shift between the second transmission wave Wt2 and the second direct wave Wd2. By multiplying the calculated relative speed by a predetermined time, virtual positions P1 and P2 of the obstacle O after the lapse of the predetermined time can be estimated, and the distance change amounts ΔD1 and ΔD2 can be calculated on the basis of the current position of the obstacle O and the virtual positions P1 and P2. Note that in a case where the vehicle 1 is reversing, a value obtained by adding the distance change amount ΔD1 to the first direct wave distance Dd1 before correction is the corrected first direct wave distance Dd1', and a value obtained by adding the distance change amount ΔD2 to the second direct wave distance Dd2 before correction is the corrected second direct wave distance Dd2'.

Then, a provisional distance (that is, the first distance) is calculated by trilateration computation based on the corrected first direct wave distance Dd1', the corrected second direct wave distance Dd2', and the installation distance D0 between the first transmission and reception part 21B and the second transmission and reception part 21A.

Note that the second distance is similarly calculated by the direct wave distance computation part 311B, the correction part 313B, and the trilateration computation part 314B, and the third distance is similarly calculated by the direct wave distance computation part 311C, the correction part 313C, and the trilateration computation part 314C.

Returning to FIG. 4, the obstacle distance determination part 315 determines the obstacle distance between the vehicle 1 and the obstacle O on the basis of the first distance calculated by the trilateration computation part 314A, the second distance calculated by the trilateration computation part 314B, and the third distance calculated by the trilateration computation part 314C.

Specifically, the obstacle distance determination part 315 determines the obstacle distance by a weighted average of the first distance, the second distance, and the third distance. Here, a weight value in the weighted average can be determined on the basis of the positions where the pair of transmission and reception parts 21 are provided. For example, assuming that the third distance calculated using the transmission and reception part 21A at the right corner and the transmission and reception part I on the right side surface portion is highly accurate, the weight value thereof can be set higher than the weight values for the first and second distances.

The obstacle distance determination part 315 may determine, as the obstacle distance, one of the first distance, the second distance, and the third distance that has been normally output.

The obstacle distance determined by the obstacle distance determination part 315 is output to the ECU 100 and the like, and is used for various vehicle controls and the like.

The obstacle distance determination part 315 executes a reliability improvement process. The reliability improvement process is a process of discarding the current obstacle distance in a case where the difference between the current obstacle distance and the past obstacle distance calculated a predetermined time before the time point at which the current obstacle distance is calculated is larger than a predetermined threshold.

Next, an object detection process according to the present embodiment configured as described above will be described.

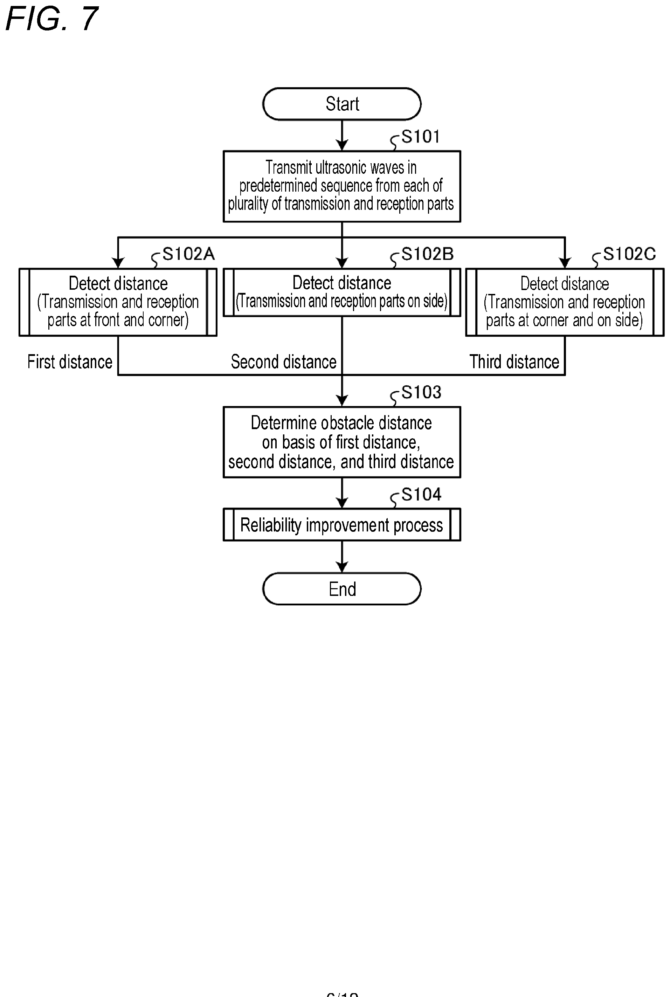

FIG. 7 is a flowchart illustrating an example of the procedure of the object detection process according to the first embodiment.

First, each of the plurality of transmission and reception parts 21 transmits ultrasonic waves in a predetermined sequence (S101). Next, the direct wave distance computation part 311A, the correction part 313A, and the trilateration computation part 314A perform a distance detection process (S102A). Simultaneously, the direct wave distance computation part 311B, the correction part 313B, and the trilateration computation part 314B perform a distance detection process (S102B), and the direct wave distance computation part 311C, the correction part 313C, and the trilateration computation part 314C perform a distance detection process (S102C).

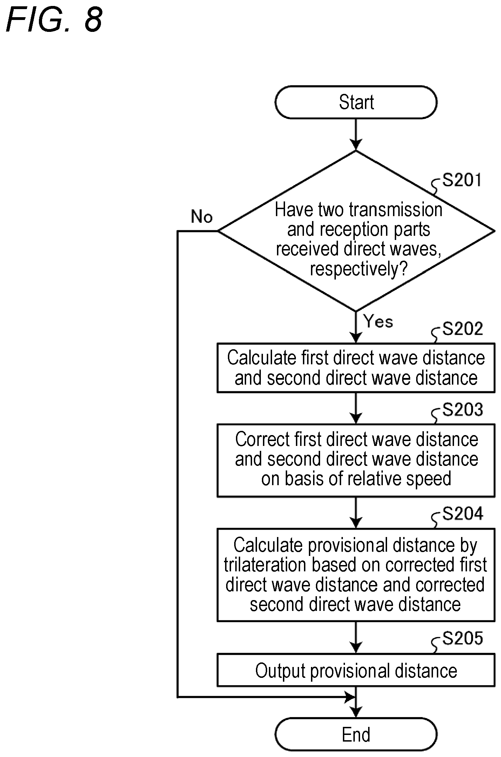

FIG. 8 is a flowchart illustrating an example of the procedure of the distance detection process according to the first embodiment. The procedure illustrated in FIG. 8 is common to the distance detection processes in S102A, S102B, and S102C.

First, the direct wave distance computation part 311 determines whether or not the two transmission and reception parts 21 have received the direct waves Wd1 and Wd2, respectively (S201). The determination as to whether or not the direct waves Wd1 and Wd2 have been received may be made by appropriately using a known or novel technique, but may be made by, for example, adjusting a detection cycle of each transmission and reception part 21 (a period of waiting for reception of a reflected wave after transmitting a transmission wave once).

In a case where the two transmission and reception parts 21 have not received the direct waves Wd1 and Wd2, respectively (S201: No), the process returns to the caller.

On the other hand, in a case where the two transmission and reception parts 21 have received the direct waves Wd1 and Wd2, respectively (S201: Yes), the direct wave distance computation part 311 calculates the first direct wave distance Dd1 and the second direct wave distance Dd2 on the basis of the timings at which the transmission waves Wt1 and Wt2 are transmitted and the timings at which the direct waves Wd1 and Wd2 are received in the two transmission and reception parts 21 (S202).

Thereafter, the correction part 313 corrects the first direct wave distance Dd1 and the second direct wave distance Dd2 on the basis of the relative speed between the vehicle 1 and the obstacle O (S203), and the trilateration computation part 314 calculates the provisional distance by trilateration based on the corrected first direct wave distance Dd1' and the corrected second direct wave distance Dd2' (S204). Then, the trilateration computation part 314 outputs the calculated provisional distance to the obstacle distance determination part 315 (S205). Here, the provisional distance calculated by the trilateration computation part 314A is referred to as the first distance, the provisional distance calculated by the trilateration computation part 314B is referred to as the second distance, and the provisional distance calculated by the trilateration computation part 314A is referred to as the third distance.

Returning to FIG. 7, next, the obstacle distance determination part 315 determines the obstacle distance as described above from the first distance calculated in the detection process process (S102A) by the direct wave distance computation part 311A, the correction part 313A, and the trilateration computation part 314A, the second distance calculated in the detection process process (S102B) by the direct wave distance computation part 311B, the correction part 313B, and the trilateration computation part 314B, and the third distance calculated in the detection process process (S102C) by the direct wave distance computation part 311C, the correction part 313C, and the trilateration computation part 314C (S103).

The obstacle distance calculated as described above may include noise. Since the obstacle distance may be used for vehicle control such as brake control in the ECU 100 and the like, high reliability is required. Therefore, the obstacle distance determination part 315 according to the present embodiment executes the reliability improvement process for improving the reliability of the output obstacle distance (S104).

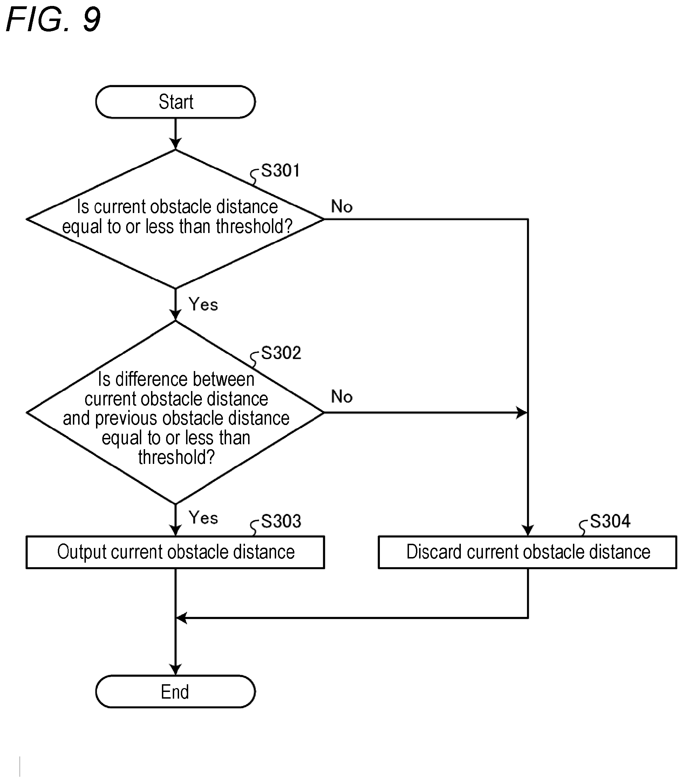

FIG. 9 is a flowchart illustrating an example of the procedure of the reliability improvement process according to the first embodiment.

The obstacle distance determination part 315 determines whether the current obstacle distance calculated as described above is equal to or less than a threshold (S301). In a case where the current obstacle distance is not equal to or less than the threshold (S301: No), the obstacle distance determination part 315 discards (does not output) the current obstacle distance (S304). The threshold should be appropriately set according to the specification or the like of the vehicle control system 50, and may be, for example, an upper limit distance or the like at which it is determined that substantially sufficient accuracy can be obtained on the basis of prior verification or the like. Note that the threshold may be a fixed value or a value that varies according to a predetermined condition.

In a case where the current obstacle distance is equal to or less than the threshold in S301 (S301: Yes), the obstacle distance determination part 315 determines whether or not the difference between the current obstacle distance and the previous obstacle distance is equal to or less than the threshold (S302). The previous obstacle distance is, for example, an obstacle distance calculated on the basis of direct waves or indirect waves detected in the previous detection cycle. In a case where the difference is not equal to or less than the threshold (S302: No), the obstacle distance determination part 315 discards the current obstacle distance (S304).

On the other hand, in a case where the difference is equal to or less than the threshold in S302 (S302: Yes), the current obstacle distance is output to the ECU 100 and the like (S303). As a result, the obstacle distance that changes more than the threshold in a short time can be discarded as noise.

Through the above process, only the highly reliable obstacle distance can be output to the ECU 100 and the like. Returning to FIG. 7, when the reliability improvement process ends, the process ends.

As described above, according to the present embodiment, the object detection device 200 includes the plurality of transmission and reception parts 21 that transmit and receive ultrasonic waves, and the computation part 201 that calculates the object distance, which is the distance from the vehicle 1 to the obstacle, on the basis of transmission and reception timings of ultrasonic waves in each transmission and reception part 21, and the computation part 301 calculates a provisional distance from the vehicle 1 to the obstacle on the basis of transmission and reception timings of ultrasonic waves in a pair of transmission and reception parts 21 of a plurality of pairs of transmission and reception parts 21 among the plurality of transmission and reception parts 21 and determines the obstacle distance on the basis of a plurality of provisional distances.

Therefore, according to the present embodiment, since estimation of the distance to an object such as an obstacle is determined by a plurality of detecting processes by the plurality of pairs of transmission and reception parts 21, the estimation accuracy of the position of the obstacle can be improved.

Furthermore, in the present embodiment, in a case where the reflected wave of a transmission wave transmitted from one transmission and reception part of a pair of transmission and reception parts among the plurality of pairs of transmission and reception parts 21 is received by the one transmission and reception part and the reflected wave of a transmission wave transmitted from the other transmission and reception part 21 of the pair of transmission and reception parts 21 is received by the other transmission and reception part 21, the computation part 301 of the object detection device 200 calculates the first direct wave distance based on the timing at which a transmission wave is transmitted from the one transmission and reception part 21 and the timing at which the reflected wave of the transmission wave is received by the one transmission and reception part 21 and the second direct wave distance based on the timing at which a transmission wave is transmitted from the other transmission and reception part 21 and the timing at which the reflected wave of the transmission wave is received by the other transmission and reception part 21, corrects the first direct wave distance and the second direct wave distance on the basis of the relative speed between the vehicle 1 and the obstacle, and calculates a provisional distance by trilateration based on the corrected first direct wave distance and the corrected second direct wave distance. Therefore, in the present embodiment, since the obstacle distance is determined on the basis of direct waves, the estimation accuracy of the position of the obstacle can be further improved.

Furthermore, according to the present embodiment, the computation part 301 of the object detection device 200 determines the object distance by a weighted average of the plurality of provisional distances. Therefore, according to the present embodiment, weighting can be performed in consideration of the reliability of each pair of transmission and reception parts 21, whereby the estimation accuracy of the position of the obstacle can be further improved.

Furthermore, according to the present embodiment, in the computation part 301 of the object detection device 200, a weight value in the weighted average is determined on the basis of the positions where each pair of transmission and reception parts 21 are provided. Therefore, according to the present embodiment, weighting can be performed in consideration of the reliability based on the positions of each pair of transmission and reception parts 21, whereby the estimation accuracy of the position of the obstacle can be further improved.

Furthermore, according to the present embodiment, in the object detection device 200, frequencies of ultrasonic waves transmitted by at least some different pairs of transmission and reception parts 21 among the plurality of pairs of transmission and reception parts 21 are different from each other. Therefore, in the present embodiment, each transmission and reception part 21 can more reliably receive a direct wave, and can further improve the estimation accuracy of the position of the obstacle.

Furthermore, according to the present embodiment, in the object detection device 200, one transmission and reception part 21 of a first pair of transmission and reception parts 21 among the plurality of pairs of transmission and reception parts 21 is provided at the front end portion of the vehicle 1, the other transmission and reception part 21 of the first pair of transmission and reception parts 21 is provided at a corner, a second pair of transmission and reception parts 21 among the plurality of pairs of transmission and reception parts 21 is provided on a side surface portion, one transmission and reception part 21 of a third pair of transmission and reception parts 21 among the plurality of pairs of transmission and reception parts 21 is provided at the corner, and the other transmission and reception part 21 is provided on the side surface portion. Therefore, according to the present embodiment, since the pairs of transmission and reception parts 21 whose positions are dispersed are used for object detection, the estimation accuracy of the position of the obstacle can be further improved.

In the present embodiment, object detection is performed using the transmission and reception part at the front end portion and the transmission and reception part 21 at the corner, the two transmission and reception parts 21 on the side surface portion, and the transmission and reception part 21 at the corner and the transmission and reception part 21 on the side surface portion as three pairs of transmission and reception parts 21, but the present embodiment is not limited thereto. The transmission and reception part 21 at any position can be used for object detection in the present embodiment.

In the present embodiment, as the plurality of pairs of transmission and reception parts 21, the three pairs of transmission and reception parts 21 have been described as an example, but the number of pairs is not limited thereto. For example, the object detection device 200 may be configured to perform object detection by using two pairs of transmission and reception parts 21 or four or more pairs of transmission and reception parts 21.

In the present embodiment, the computation part 301 obtains the provisional distance to the obstacle by using direct waves. However, in a case where an indirect wave can be received, the computation part 301 may be configured to calculate the provisional distance to the obstacle by using a direct wave and an indirect wave.

In the present embodiment, an obstacle has been described as an example of the object to be detected, but the present embodiment is not limited thereto. For example, the object detection device 200 may be configured to detect a parking frame as an object.

In the present embodiment, it has been described frequencies of ultrasonic waves transmitted by at least some different pairs of transmission and reception parts 21 among the plurality of pairs of transmission and reception parts 21 are different from each other, but the present embodiment is not limited thereto. Instead of using ultrasonic waves having different frequencies, for example, ultrasonic waves that differ from each other in up/down chirp signal or in coding by changing amplitude and/or phase and/or frequency may be used. By improving the identification system of an ultrasonic wave from each transmission and reception part 21, each transmission and reception part 21 can further improve the estimation accuracy of the position of the obstacle.

### [Second embodiment]

In the first embodiment, the obstacle distance is calculated using the reception timings of direct waves, but in the second embodiment, an obstacle distance is calculated using both the reception timings of direct waves and the reception timings of indirect waves.

Since the configuration of a vehicle 1, the configuration of a vehicle control system 50, and a method of calculating a distance by the TOF method according to the second embodiment are similar to those of the first embodiment described with reference to FIGS. 1 to 3, the description thereof will be omitted.

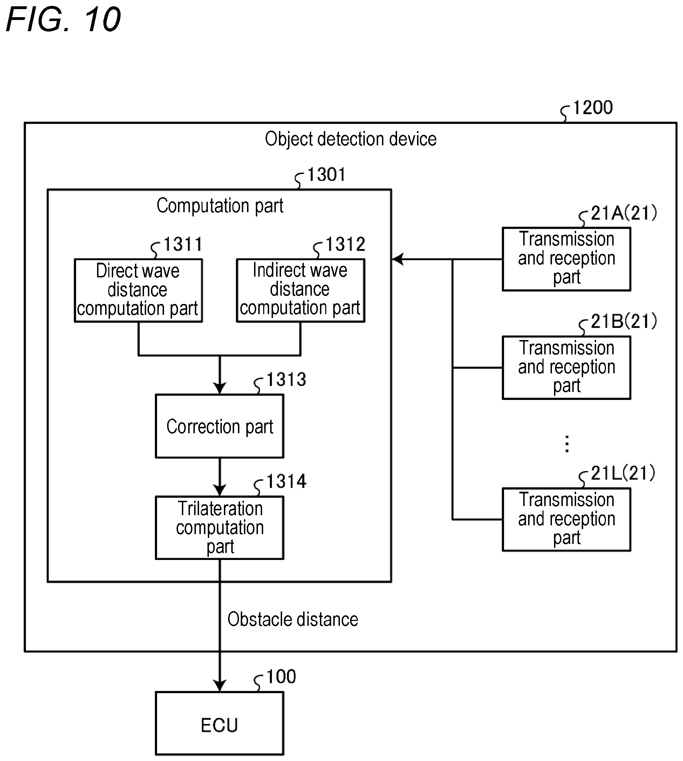

FIG. 10 is a diagram illustrating an example of a functional configuration of an object detection device 1200 according to the second embodiment. The object detection device 1200 according to the present embodiment includes a computation part 1301. The computation part 1301 includes a direct wave distance computation part 1311, an indirect wave distance computation part 1312, a correction part 1313, and a trilateration computation part 1314. These functional parts can be realized, for example, by cooperation of hardware and software (program or the like) of the object detection device 1200 as illustrated in FIG. 2. In addition, at least some of these functional parts may be realized by dedicated hardware (circuit).

The computation part 1301 calculates an obstacle distance, which is a distance from the vehicle 1 to an obstacle O, on the basis of transmission and reception timings of ultrasonic waves in each transmission and reception part 21. That is, the computation part 301 calculates the distance from the vehicle 1 (mobile body) to the obstacle O (object) by a plurality of methods on the basis of the transmission and reception timings of ultrasonic waves in the plurality of transmission and reception parts 21.

Reflected waves received by each transmission and reception part 21 according to the present embodiment include a direct wave and an indirect wave. Since the definitions of the direct wave and the indirect wave are similar to those of the first embodiment, the description thereof will be omitted. The computation part 1301 of the present embodiment calculates the obstacle distance by using both the reception timings of direct waves and reception timings of indirect waves.

The computation part 1301 according to the present embodiment includes the direct wave distance computation part 1311, the indirect wave distance computation part 1312, the correction part 1313, and the trilateration computation part 1314.

Similarly to the direct wave distance computation parts 311A, 311B, and 311C according to the first embodiment, in a case where the reflected wave of a transmission wave transmitted from a first transmission and reception part (for example, 21A), which is one of the plurality of transmission and reception parts 21, is received by the first transmission and reception part, the direct wave distance computation part 1311 calculates a first direct wave distance based on the timing at which a transmission wave is transmitted from the first transmission and reception part and the timing at which the reflected wave (direct wave) of the transmission wave is received by the first transmission and reception part. Similarly to the direct wave distance computation parts 311A, 311B, and 311C according to the first embodiment, in a case where the reflected wave of a transmission wave transmitted from a second transmission and reception part (for example, 21B) different from the first transmission and reception part is received by the second transmission and reception part, the direct wave distance computation part 1311 calculates a second direct wave distance based on the timing at which a transmission wave is transmitted from the second transmission and reception part and the timing at which the reflected wave (direct wave) of the transmission wave is received by the second transmission and reception part. That is, the first direct wave distance is calculated on the basis of the direct wave received by the first transmission and reception part, and the second direct wave distance is calculated on the basis of the direct wave received by the second transmission and reception part.

In a case where the reflected wave of a transmission wave transmitted from a third transmission and reception part (for example, 21A), which is one of the plurality of transmission and reception parts 21, is received by a fourth transmission and reception part (for example, 21B) different from the third transmission and reception part, the indirect wave distance computation part 1312 calculates a first indirect wave distance based on the timing at which a transmission wave is transmitted from the third transmission and reception part and the timing at which the reflected wave (indirect wave) of the transmission wave is received by the fourth transmission and reception part. In a case where the reflected wave of a transmission wave transmitted from the fourth transmission and reception part is received by the third transmission and reception part, the indirect wave distance computation part 1312 calculates a second indirect wave distance based on the timing at which a transmission wave is transmitted from the fourth transmission and reception part and the timing at which the reflected wave (indirect wave) of the transmission wave is received by the third transmission and reception part. That is, the first indirect wave distance is calculated on the basis of the indirect wave transmitted from the third transmission and reception part and received by the fourth transmission and reception part, and the second direct wave distance is calculated on the basis of the indirect wave transmitted from the fourth transmission and reception part and received by the third transmission and reception part.

The correction part 1313 corrects the first direct wave distance and the second direct wave distance, and the second direct wave distance and the second indirect wave distance on the basis of the relative speed between the vehicle 1 and the obstacle O.

Similarly to the trilateration computation parts 314A, 314B, and 314C according to the first embodiment, the trilateration computation part 1314 calculates the obstacle distance by trilateration based on the corrected first direct wave distance and the corrected second direct wave distance. In addition, the trilateration computation part 1314 calculates the obstacle distance by trilateration based on the corrected first indirect wave distance and the corrected second indirect wave distance. The obstacle distance calculated by the trilateration computation part 1314 is output to an ECU 100 and the like, and is used for various vehicle controls and the like.

According to the above configuration, in a case where direct waves are detected by the two transmission and reception parts 21, respectively, two direct wave distances are calculated on the basis of the direct waves, these direct wave distances are corrected on the basis of the relative speed, and the obstacle distance is calculated by trilateration based on the corrected direct wave distances. In a case where indirect waves are detected by the two transmission and reception parts 21, respectively, two indirect wave distances are calculated on the basis of the indirect waves, these indirect wave distances are corrected on the basis of the relative speed, and the obstacle distance is calculated by trilateration based on the corrected indirect wave distances. As a result, even in a case where only one of a direct wave or an indirect wave is detected, an obstacle can be detected with high accuracy by trilateration.

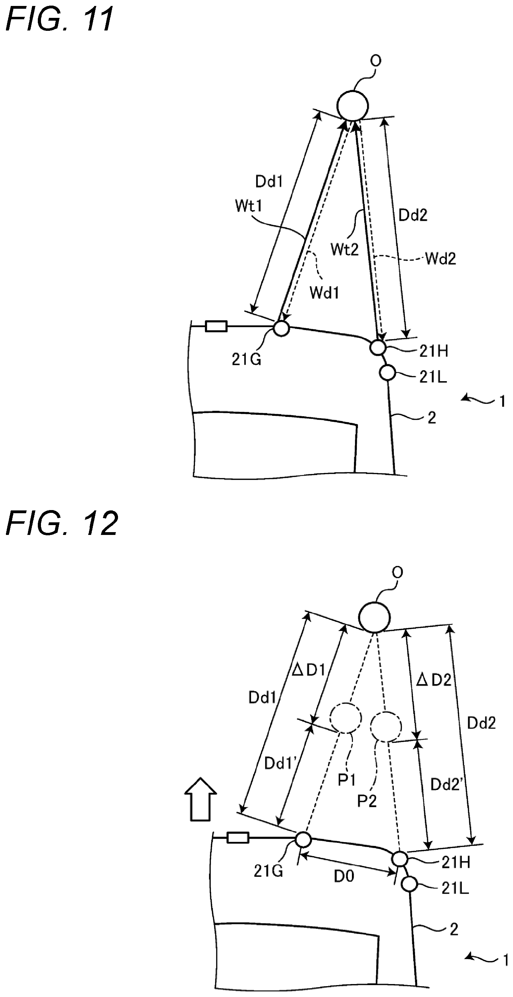

FIG. 11 is a diagram illustrating an example of a first direct wave distance Dd1 and a second direct wave distance Dd2 according to the second embodiment. FIG. 11 illustrates a situation in which two transmission and reception parts 21G and 21H installed at the rear portion of the vehicle 1 are referred to as a first transmission and reception part and a second transmission and reception part, respectively, and the obstacle O exists behind the vehicle 1. FIG. 11 illustrates a first transmission wave Wt1 transmitted from the first transmission and reception part 21G and a first direct wave Wd1, which is generated when the first transmission wave Wt1 is reflected by the obstacle O and is received by the first transmission and reception part 21G. In addition, FIG. 11 illustrates a second transmission wave Wt2 transmitted from the second transmission and reception part 21H and a second direct wave Wd2, which is generated when the second transmission wave Wt2 is reflected by the obstacle O and is received by the second transmission and reception part 21H.

The first direct wave distance Dd1 is calculated on the basis of the timing at which the first transmission wave Wt1 is transmitted from the first transmission and reception part 21G and the timing at which the first direct wave Wd1 is received by the first transmission and reception part 21G. The second direct wave distance Dd2 is calculated on the basis of the timing at which the second transmission wave Wt2 is transmitted from the second transmission and reception part 21H and the timing at which the second direct wave Wd2 is received by the second transmission and reception part 21H.

FIG. 12 is a diagram illustrating examples of a corrected first direct wave distance Dd1' and a corrected second direct wave distance Dd2' according to the second embodiment. FIG. 12 illustrates the corrected first direct wave distance Dd1' and the corrected second direct wave distance Dd2' in a case where the vehicle 1 gradually moves backward.

The corrected first direct wave distance Dd1' illustrated here is calculated by subtracting a distance change amount ΔD1 based on the relative speed between the vehicle 1 and the obstacle O from the first direct wave distance Dd1 calculated as described above. The corrected second direct wave distance Dd2' is calculated by subtracting a distance change amount ΔD2 based on the relative speed between the vehicle 1 and the obstacle O from the second direct wave distance Dd2 calculated as described above. The relative speed may be calculated using an appropriate method, but can be calculated on the basis of, for example, a Doppler shift between the first transmission wave Wt1 and the first direct wave Wd1 and a Doppler shift between the second transmission wave Wt2 and the second direct wave Wd2. By multiplying the calculated relative speed by a predetermined time, virtual positions P1 and P2 of the obstacle O after the lapse of the predetermined time can be estimated, and the distance change amounts ΔD1 and ΔD2 can be calculated on the basis of the current position of the obstacle O and the virtual positions P1 and P2. Note that in a case where the vehicle 1 is moving forward, a value obtained by adding the distance change amount ΔD1 to the first direct wave distance Dd1 before correction is the corrected first direct wave distance Dd1', and a value obtained by adding the distance change amount ΔD2 to the second direct wave distance Dd2 before correction is the corrected second direct wave distance Dd2'.

Then, the obstacle distance is calculated by trilateration computation based on the corrected first direct wave distance Dd1', the corrected second direct wave distance Dd2', and the installation distance D0 between the first transmission and reception part 21G and the second transmission and reception part 21H.

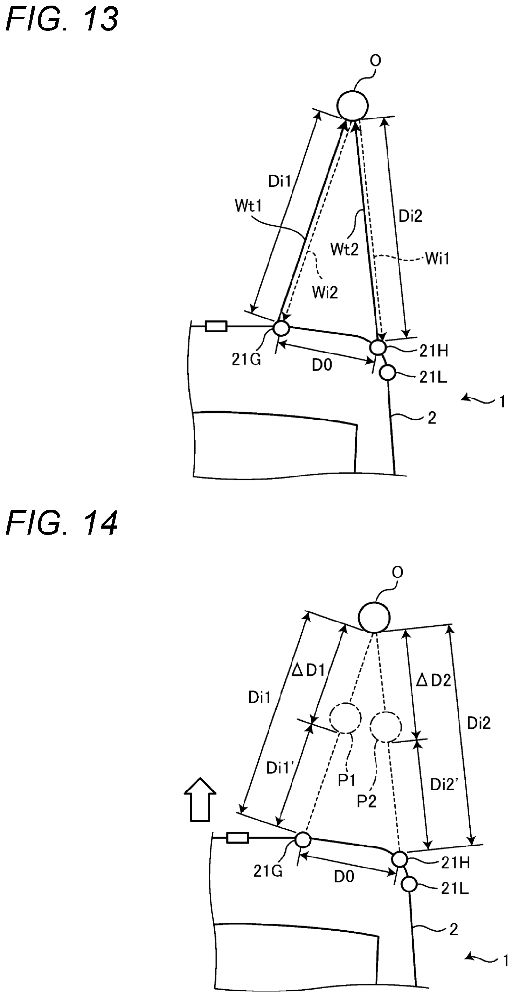

FIG. 13 is a diagram illustrating examples of a first indirect wave distance Di1 and a second indirect wave distance Di2 according to the second embodiment. FIG. 13 illustrates a situation in which the two transmission and reception parts 21G and 21H installed at the rear portion of the vehicle 1 are referred to as the third transmission and reception part and the fourth transmission and reception part, respectively, and the obstacle O exists behind the vehicle 1. Note that here, a case where the first transmission and reception part and the third transmission and reception part are the same transmission and reception part 21G, and the second transmission and reception part and the fourth transmission and reception part are the same transmission and reception part 21H will be illustrated, but the present embodiment is not limited thereto.

FIG. 13 illustrates a situation in which the fourth transmission and reception part 21H receives a first indirect wave Wi1 and the third transmission and reception part 21G receives a second indirect wave Wi2. The first indirect wave Wi1 is a reflected wave generated when the first transmission wave Wt1 transmitted from the third transmission and reception part 21G is reflected by the obstacle O. The second indirect wave Wi2 is a reflected wave generated when the second transmission wave Wt2 transmitted from the fourth transmission and reception part 21H is reflected by the obstacle O.

The first indirect wave distance Di1 is calculated on the basis of the timing at which the third transmission wave Wt1 is transmitted from the first transmission and reception part 21G and the timing at which the first indirect wave Wi1 is received by the fourth transmission and reception part 21H. The second indirect wave distance Di2 is calculated on the basis of the timing at which the second transmission wave Wt2 is transmitted from the fourth transmission and reception part 21H and the timing at which the second indirect wave Wi2 is received by the third transmission and reception part 21G.

FIG. 14 is a diagram illustrating examples of a corrected first indirect wave distance Di1' and a corrected second indirect wave distance Di2' according to the embodiment. Similarly to FIG. 12, FIG. 14 illustrates the corrected first indirect wave distance Di1' and the corrected second indirect wave distance Di2' in a case where the vehicle 1 gradually moves backward.

The corrected first indirect wave distance Di1' illustrated here is calculated by subtracting the distance change amount ΔD1 based on the relative speed between the vehicle 1 and the obstacle O from the first indirect wave distance Di1 calculated as described above. The corrected second indirect wave distance Di2' is calculated by subtracting the distance change amount ΔD2 based on the relative speed between the vehicle 1 and the obstacle O from the second indirect wave distance Di2 calculated as described above. Then, as described above, by multiplying the calculated relative speed by a predetermined time, virtual positions P1 and P2 of the obstacle O after the lapse of the predetermined time can be estimated, and the distance change amounts ΔD1 and ΔD2 can be calculated on the basis of the current position of the obstacle O and the virtual positions P1 and P2. Note that in a case where the vehicle 1 is moving forward, a value obtained by adding the distance change amount ΔD1 to the first indirect wave distance Di1 before correction is the corrected first indirect wave distance Di1', and a value obtained by adding the distance change amount ΔD2 to the second indirect wave distance Di2 before correction is the corrected second indirect wave distance Di2'.

Then, the obstacle distance is calculated by trilateration computation based on the corrected first indirect wave distance Di1', the corrected second indirect wave distance Di2', and the installation distance D0.

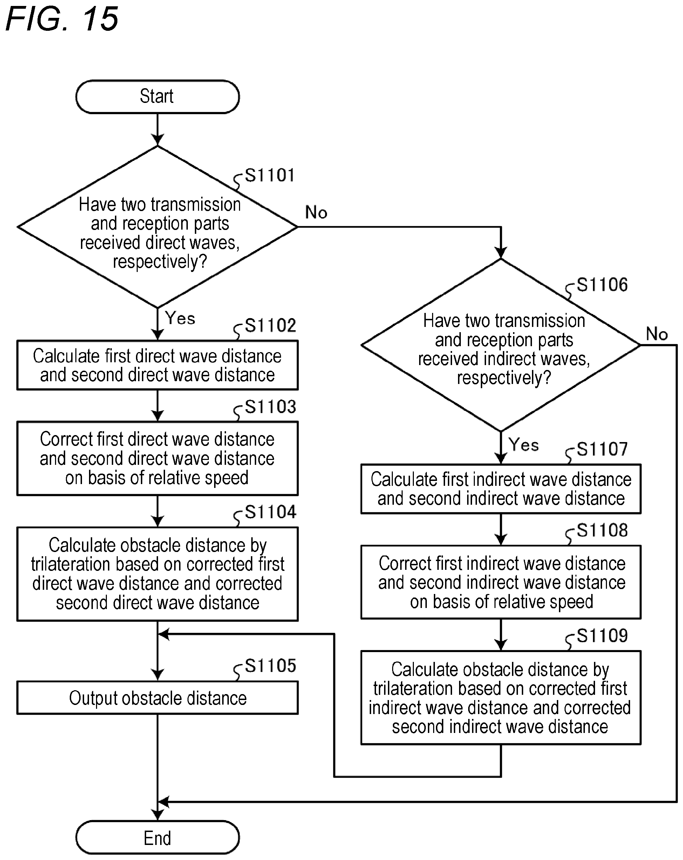

FIG. 15 is a flowchart illustrating an example of a process in the object detection device 1200 according to the second embodiment. First, the direct wave distance computation part 1311 determines whether or not the two transmission and reception parts 21 have received the direct waves Wd1 and Wd2, respectively (S1101). The determination as to whether or not the direct waves Wd1 and Wd2 have been received may be made by appropriately using a known or novel technique, but may be made by, for example, adjusting a detection cycle of each transmission and reception part 21 (a period of waiting for reception of a reflected wave after transmitting a transmission wave once).

In a case where the two transmission and reception parts 21 have received the direct waves Wd1 and Wd2, respectively (S1101: Yes), the direct wave distance computation part 1311 calculates the first direct wave distance Dd1 and the second direct wave distance Dd2 on the basis of the timings at which the transmission waves Wt1 and Wt2 are transmitted and the timings at which the direct waves Wd1 and Wd2 are received in the two transmission and reception parts 21 (S1102).

Thereafter, the correction part 1313 corrects the first direct wave distance Dd1 and the second direct wave distance Dd2 on the basis of the relative speed between the vehicle 1 and the obstacle O (S1103), and the trilateration computation part 1314 calculates the obstacle distance by trilateration based on the corrected first direct wave distance Dd1' and the corrected second direct wave distance Dd2' (S1104). Then, the calculated obstacle distance is output to the ECU 100 and the like (S1105).

On the other hand, in a case where the two transmission and reception parts 21 have not received the direct waves Wd1 and Wd2, respectively (S1101: No), the indirect wave distance computation part 1312 determines whether or not the two transmission and reception parts 21 have received the indirect waves Wi1 and Wi2, respectively (S1106). The determination as to whether or not the indirect waves Wi1 and Wi2 have been received may be made by appropriately using a known or novel technique, but may be made by, for example, adjusting a detection cycle of each transmission and reception part 21.

In a case where the two transmission and reception parts 21 have not received the indirect waves Wi1 and Wi2, respectively (S1106: No), the routine ends. In a case where the two transmission and reception parts 21 have received the indirect waves Wi1 and Wi2, respectively (S1106: Yes), the indirect wave distance computation part 1312 calculates the first indirect wave distance Di1 and the second indirect wave distance Di2 on the basis of the timings at which the transmission waves Wt1 and Wt2 are transmitted and the timings at which the indirect waves Wt1 and Wt2 are received in the two transmission and reception parts 21 (S1107).

Thereafter, the correction part 1313 corrects the first indirect wave distance Di1 and the second indirect wave distance Di2 on the basis of the relative speed between the vehicle 1 and the obstacle O (S1108), and the trilateration computation part 1314 calculates the obstacle distance by trilateration based on the corrected first indirect wave distance Di1' and the corrected second indirect wave distance Di2' (S1109). Then, the calculated obstacle distance is output to the ECU 100 and the like (S1105).

The obstacle distance calculated as described above may include noise. Since the obstacle distance may be used for vehicle control such as brake control in the ECU 100 and the like, high reliability is required. Therefore, the computation part 1301 according to the present embodiment has a function for improving the reliability of the output obstacle distance.

Here, since the process for improving the reliability of the obstacle distance is similar to the process at the time of outputting the obstacle distance according to the first embodiment described with reference to FIG. 9, the description thereof will be omitted.

As described above, according to the present embodiment, in a case where direct waves are detected by the two transmission and reception parts 21, respectively, two direct wave distances are calculated on the basis of the direct waves, these direct wave distances are corrected on the basis of the relative speed, and the obstacle distance is calculated by trilateration based on the corrected direct wave distances. In a case where indirect waves are detected by the two transmission and reception parts 21, respectively, two indirect wave distances are calculated on the basis of the indirect waves, these indirect wave distances are corrected on the basis of the relative speed, and the obstacle distance is calculated by trilateration based on the corrected indirect wave distances. As a result, even in a case where only one of a direct wave or an indirect wave is detected, an obstacle can be detected with high accuracy by trilateration.

A program for causing a computer (for example, the processor 223 or the like) to execute a process for realizing the functions of the object detection device 200, 1200 can be provided by being recorded on a computer-readable recording medium such as a compact disc (CD)-ROM, a flexible disk (FD), a CD-recordable (R), or a digital versatile disk (DVD) as a file in an installable format or an executable format. Furthermore, the program may be provided or distributed via a network such as the Internet.

Although some embodiments of the present invention have been described, these embodiments have been presented as examples, and are not intended to limit the scope of the invention. These novel embodiments can be implemented in various other forms, and various omissions, replacements, and changes can be made without departing from the spirit of the invention. These embodiments and modifications thereof are included in the scope and the spirit of the invention, and are also included in the invention described in the claims and the scope equivalent thereto.

### [Summary of present embodiments]

The object detection device (200, 1200) of the present embodiment includes at least the following configuration.

That is, the object detection device (200, 1200) according to an embodiment being mounted on a mobile body and detecting an object present around the mobile body, the object detection device (200, 1200) includes:
a plurality of transmission and reception parts (21) that transmit and receive ultrasonic waves; and
a computation part (301, 1301) that calculates an object distance, which is a distance from the mobile body to the object, on the basis of transmission and reception timings of ultrasonic waves in each of the plurality of transmission and reception parts,
in which the computation part (301, 1301) calculates the distance from the mobile body to the object by a plurality of methods on the basis of transmission and reception timings of ultrasonic waves in the plurality of transmission and reception parts (21).

With this configuration, as an example, an obstacle can be detected with high accuracy.

Furthermore, in the object detection device (200) according to the embodiment, the computation part (301) calculates a provisional distance from the mobile body to the object on the basis of transmission and reception timings of ultrasonic waves in a pair of transmission and reception parts (21) of a plurality of pairs of transmission and reception parts (21) among the plurality of transmission and reception parts (21), and determines the object distance on the basis of a plurality of provisional distances.

With this configuration, as an example, since estimation of the distance to the object such as an obstacle is determined by a plurality of detecting processes by the plurality of pairs of transmission and reception parts 21, the estimation accuracy of the position of the obstacle can be improved.

Furthermore, in the object detection device (200) according to the embodiment,
in a case where a reflected wave of a transmission wave transmitted from one transmission and reception part of a pair of transmission and reception parts (21) of the plurality of pairs of transmission and reception parts (21) is received by the one transmission and reception part and a reflected wave of a transmission wave transmitted from the other transmission and reception part of the pair of transmission and reception parts (21) is received by the other transmission and reception part,
the computation part (301) calculates a first direct wave distance based on a timing at which a transmission wave is transmitted from the one transmission and reception part and a timing at which a reflected wave of the transmission wave is received by the one transmission and reception part and a second direct wave distance based on a timing at which a transmission wave is transmitted from the other transmission and reception part and a timing at which a reflected wave of the transmission wave is received by the other transmission and reception part, corrects the first direct wave distance and the second direct wave distance on the basis of a relative speed between the mobile body and the object, and calculates the provisional distance by trilateration based on the first direct wave distance that has been corrected and the second direct wave distance that has been corrected.

With this configuration, as an example, since the obstacle distance is determined on the basis of the direct waves, the estimation accuracy of the position of the obstacle can be further improved.

Furthermore, in the object detection device (200) according to the embodiment, the computation part (301) determines the object distance by a weighted average of the plurality of provisional distances.

With this configuration, as an example, weighting can be performed in consideration of the reliability of each pair of transmission and reception parts (21), whereby the estimation accuracy of the position of the obstacle can be further improved.

Furthermore, in the object detection device (200) according to the embodiment, a weight value in the weighted average is determined on the basis of positions where the corresponding pair of transmission and reception parts of the plurality of pairs of transmission and reception parts are provided.

With this configuration, as an example, weighting can be performed in consideration of the reliability based on the positions of each pair of transmission and reception parts 21, whereby the estimation accuracy of the position of the obstacle can be further improved.

Furthermore, in the object detection device (200) according to the embodiment, frequencies of ultrasonic waves transmitted by at least some different pairs of transmission and reception parts among the plurality of pairs of transmission and reception parts are different from each other.

With this configuration, as an example, each transmission and reception part (21) can more reliably receive a direct wave, and can further improve the estimation accuracy of the position of the obstacle.

Furthermore, in the object detection device (200) according to the embodiment,
one transmission and reception part of a first pair of transmission and reception parts among the plurality of pairs of transmission and reception parts (21) is provided at a front end portion, which is a forward side of the mobile body, and the other transmission and reception part of the first pair of transmission and reception parts is provided at a corner portion from the front end portion to a side surface portion of the mobile body,
a second pair of transmission and reception parts among the plurality of pairs of transmission and reception parts (21) is provided on the side surface portion, and
one transmission and reception part of a third pair of transmission and reception parts among the plurality of pairs of transmission and reception parts (21) is provided at the corner portion, and the other transmission and reception part is provided on the side surface portion.

With this configuration, as an example, since the pairs of transmission and reception parts (21) whose positions are dispersed are used for object detection, the estimation accuracy of the position of the obstacle can be further improved.

Furthermore, in the object detection device (1200) according to the embodiment,
in a case where a reflected wave of a transmission wave transmitted from a first transmission and reception part, which is one of the plurality of transmission and reception parts (21), is received by the first transmission and reception part and a reflected wave of a transmission wave transmitted from a second transmission and reception part different from the first transmission and reception part is received by the second transmission and reception part, the computation part (1301) calculates a first direct wave distance based on a timing at which a transmission wave is transmitted from the first transmission and reception part and a timing at which a reflected wave of the transmission wave is received by the first transmission and reception part and a second direct wave distance based on a timing at which a transmission wave is transmitted from the second transmission and reception part and a timing at which a reflected wave of the transmission wave is received by the second transmission and reception part, corrects the first direct wave distance and the second direct wave distance on the basis of a relative speed between the mobile body and the object, and calculates the object distance by trilateration based on the first direct wave distance that has been corrected and the second direct wave distance that has been corrected, and
in a case where a reflected wave of a transmission wave transmitted from a third transmission and reception part, which is one of the plurality of transmission and reception parts (21), is received by a fourth transmission and reception part different from the third transmission and reception part and a reflected wave of a transmission wave transmitted from the fourth transmission and reception part is received by the third transmission and reception part, the computation part (1301) calculates a first indirect wave distance based on a timing at which a transmission wave is transmitted from the third transmission and reception part and a timing at which a reflected wave of the transmission wave is received by the fourth transmission and reception part and a second indirect wave distance based on a timing at which a transmission wave is transmitted from the fourth transmission and reception part and a timing at which a reflected wave of the transmission wave is received by the third transmission and reception part, corrects the first indirect wave distance and the second indirect wave distance on the basis of the relative speed, and calculates the object distance by trilateration based on the first indirect wave distance that has been corrected and the second indirect wave distance that has been corrected.

With this configuration, as an example, in a case where direct waves are detected by the two transmission and reception parts, respectively, two direct wave distances are calculated on the basis of the direct waves, these direct wave distances are corrected on the basis of the relative speed, and the obstacle distance is calculated by trilateration based on the corrected direct wave distances. In addition, in a case where indirect waves are detected by the two transmission and reception parts, respectively, two indirect wave distances are calculated on the basis of the indirect waves, these indirect wave distances are corrected on the basis of the relative speed, and the obstacle distance is calculated by trilateration based on the corrected indirect wave distances. As a result, even in a case where only one of a direct wave or an indirect wave can be detected, an obstacle can be detected with high accuracy by trilateration.

Furthermore, in the object detection device (1200) according to the embodiment, the relative speed is calculated on the basis of a Doppler shift between a frequency of the transmission wave and a frequency of the reflected wave corresponding to the transmission wave.

With this configuration, as an example, the relative speed can be calculated using information acquired from the transmission and reception part (21).

Furthermore, in the object detection device (1200) according to the embodiment, in a case where the object distance calculated by the trilateration is larger than a predetermined threshold, the computation part (1301) discards the obstacle distance.

With this configuration, as an example, only the object distance within the range of the distance at which sufficient accuracy can be obtained can be used, and the reliability of the obstacle distance can be improved.

Furthermore, in the object detection device (1200) according to the present embodiment, the computation part (1301) discards a current object distance in a case where a difference between the current object distance and a past object distance calculated a predetermined time before the time point at which the current object distance is calculated is larger than a predetermined threshold.

With this configuration, as an example, the object distance that greatly varies in a short time is highly likely to be noise. Therefore, with the above configuration, the reliability of the object distance can be improved.

### REFERENCE SIGNS LIST

1: Vehicle, 2: Vehicle body, 21, 21A to 21L: Transmission and reception part, 50: Vehicle control system, 100: ECU, 200,1200: Object detection device, 211: Vibrator, 220: Control part, 221: Input and output device, 222: Storage device, 223: Processor, 301,1301: Computation part, 311, 311A, 311B, 311C, 1311: Direct wave distance computation part, 313, 313A, 313B, 313C, 1313: Correction part, 314, 314A, 314B, 314C, 1314: Trilateration computation part, 315: Obstacle distance determination part, Dd1: First direct wave distance, Dd1': Corrected first direct wave distance, Dd2: Second direct wave distance, Dd2': Corrected second direct wave distance, Wd1: First direct wave, Wd2: Second direct wave, Wt1: First transmission wave, Wt2: Second transmission wave, and O: Obstacle (Object)

## Claims

1. An object detection device being mounted on a mobile body and detecting an object present around the mobile body, the object detection device comprising:
a plurality of transmission and reception parts that transmit and receive ultrasonic waves; and
a computation part that calculates an object distance, which is a distance from the mobile body to the object, on a basis of transmission and reception timings of ultrasonic waves in each of the plurality of transmission and reception parts,
wherein
the computation part calculates the distance from the mobile body to the object by a plurality of methods on a basis of transmission and reception timings of ultrasonic waves in the plurality of transmission and reception parts.

2. The object detection device according to claim 1, wherein the computation part calculates a provisional distance from the mobile body to the object on a basis of transmission and reception timings of ultrasonic waves in a pair of transmission and reception parts of a plurality of pairs of transmission and reception parts among the plurality of transmission and reception parts, and determines the object distance on a basis of a plurality of provisional distances.

3. The object detection device according to claim 2,
wherein in a case where a reflected wave of a transmission wave transmitted from one transmission and reception part of a pair of transmission and reception parts among the plurality of pairs of transmission and reception parts is received by the one transmission and reception part and a reflected wave of a transmission wave transmitted from another transmission and reception part of the pair of transmission and reception parts is received by the another transmission and reception part,
the computation part calculates a first direct wave distance based on a timing at which a transmission wave is transmitted from the one transmission and reception part and a timing at which a reflected wave of the transmission wave is received by the one transmission and reception part and a second direct wave distance based on a timing at which a transmission wave is transmitted from the another transmission and reception part and a timing at which a reflected wave of the transmission wave is received by the another transmission and reception part, corrects the first direct wave distance and the second direct wave distance on a basis of a relative speed between the mobile body and the object, and calculates the provisional distance by trilateration based on the first direct wave distance that has been corrected and the second direct wave distance that has been corrected.

4. The object detection device according to claim 2, wherein the computation part determines the object distance by a weighted average of the plurality of provisional distances.

5. The object detection device according to claim 4, wherein a weight value in the weighted average is determined on a basis of positions where a corresponding pair of transmission and reception parts of the plurality of pairs of transmission and reception parts are provided.

6. The object detection device according to claim 2, wherein frequencies of ultrasonic waves transmitted by at least some different pairs of transmission and reception parts among the plurality of pairs of transmission and reception parts are different from each other.

7. The object detection device according to claim 2,
wherein one transmission and reception part of a first pair of transmission and reception parts among the plurality of pairs of transmission and reception parts is provided at a front end portion, which is a forward side of the mobile body, and another transmission and reception part of the first pair of transmission and reception parts is provided at a corner portion from the front end portion to a side surface portion of the mobile body,
a second pair of transmission and reception parts among the plurality of pairs of transmission and reception parts is provided on the side surface portion, and
one transmission and reception part of a third pair of transmission and reception parts among the plurality of pairs of transmission and reception parts is provided at the corner portion, and another transmission and reception part is provided on the side surface portion.

8. The object detection device according to claim 1,
wherein in a case where a reflected wave of a transmission wave transmitted from a first transmission and reception part, which is one of the plurality of transmission and reception parts, is received by the first transmission and reception part and a reflected wave of a transmission wave transmitted from a second transmission and reception part different from the first transmission and reception part is received by the second transmission and reception part, the computation part calculates a first direct wave distance based on a timing at which a transmission wave is transmitted from the first transmission and reception part and a timing at which a reflected wave of the transmission wave is received by the first transmission and reception part and a second direct wave distance based on a timing at which a transmission wave is transmitted from the second transmission and reception part and a timing at which a reflected wave of the transmission wave is received by the second transmission and reception part, corrects the first direct wave distance and the second direct wave distance on a basis of a relative speed between the mobile body and the object, and calculates the object distance by trilateration based on the first direct wave distance that has been corrected and the second direct wave distance that has been corrected, and
in a case where a reflected wave of a transmission wave transmitted from a third transmission and reception part, which is one of the plurality of transmission and reception parts, is received by a fourth transmission and reception part different from the third transmission and reception part and a reflected wave of a transmission wave transmitted from the fourth transmission and reception part is received by the third transmission and reception part, the computation part calculates a first indirect wave distance based on a timing at which a transmission wave is transmitted from the third transmission and reception part and a timing at which a reflected wave of the transmission wave is received by the fourth transmission and reception part and a second indirect wave distance based on a timing at which a transmission wave is transmitted from the fourth transmission and reception part and a timing at which a reflected wave of the transmission wave is received by the third transmission and reception part, corrects the first indirect wave distance and the second indirect wave distance on a basis of the relative speed, and calculates the object distance by trilateration based on the first indirect wave distance that has been corrected and the second indirect wave distance that has been corrected.

9. The object detection device according to claim 8, wherein the relative speed is calculated on a basis of a Doppler shift between a frequency of the transmission wave and a frequency of the reflected wave corresponding to the transmission wave.

10. The object detection device according to claim 8, wherein in a case where the object distance calculated by the trilateration is larger than a predetermined threshold, the computation part discards the object distance.

11. The object detection device according to claim 8, wherein the computation part discards a current object distance in a case where a difference between the current object distance and a past object distance calculated a predetermined time before a time point at which the current object distance is calculated is larger than a predetermined threshold.
